# EUROPEAN PATENT APPLICATION

(11) **EP 2 808 367 A1**
(43) Date of publication of application: **03.12.2014**
(21) Application number: 13740640.1
(22) Date of filing: 24.01.2013
(51) Int. Cl.: C09D 167/00, C09D 7/12, C09D 161/10

(54) **COATING COMPOSITION, CAN COATING CONTAINING SAME, AND CAN INNER SURFACE COATING METAL MATERIAL COATED WITH SAID CAN COATING**

(30) Priority: 27.01.2012 JP 2012015226
(71) Applicant: DIC Corporation, Tokyo 174-8520 (JP)
(72) Inventor: ITOU Yoshiki, Tokyo 174-8520 (JP); OOTSUKA Yoshikuni, Tokyo 174-8520 (JP)
(74) Representative: Adam, Holger
(86) International application number: PCT/JP2013/051440
(87) International publication number: WO 2013/111814

(57) **Abstract**

[Object] To provide a coating material composition having excellent coating workability used particularly for a coating material of interior surfaces of beverage cans and food cans, with which not only crystallization of a coating which causes workability degradation is suppressed but also internal stress can be suppressed and stretchability can be imparted to the coating.

[Solution] A thermosetting resin composition containing 100 parts by weight of a polyester resin composition and 1 to 100 parts by weight of a resole-type phenolic resin (C), the polyester resin composition containing a polyester resin (A) having a glass transition temperature (hereinafter referred to as Tg) of 0°C or more and a polyester resin (B) having a Tg less than 0°C, in which the weight ratio [(A)/(B)] is 95/5 to 60/40.

## Description

### Technical Field

The present invention relates to a resin composition for a coating material used as a coating material for interior surfaces of beverage cans, food cans, or the like.

### Background Art

Interior surfaces of beverage cans, food cans, and lids are coated with organic coatings to prevent corrosion of metal (corrosion resistance and sulfur resistance) by food and preserve taste and flavor of the contents.

Organic solvent-type coating materials such as vinyl organosol-based coating materials and coating materials containing bisphenol A-type epoxy resins as the main resin and phenolic resins as curing agents have been commonly used as the coating materials for interior surfaces.

In recent years, organic solvent-type coating materials are being increasingly replaced by aqueous coating materials due to a problem caused by carbon dioxide and global environmental pollution caused by organic solvents emitted from such coating materials. Acryl-modified epoxy resin-based aqueous coating materials prepared by neutralizing the reaction product of an epoxy resin and an acrylic resin and dispersing the neutralized product in water are now used as the can interior aqueous coating materials that are used on interior surfaces of can bodies and can lids.

However, recent studies have reported that bisphenol A, which is a raw material for epoxy resins, may have an estrogen action and may affect brains of fetuses and babies. Accordingly, coating materials free of epoxy resins are highly anticipated.

High-molecular linear polyester resin-based coating materials feature adhesion to underlying metal materials and good flavor-retaining property and good coating hardness when formed into coatings.

However, workability of a coating obtained by applying a high-molecular-weight polyester resin coating material tends to deteriorate during storage due to crystallization of the polyester resin. There is a problem in that a coating that is several days old after baking cannot withstand working such as drawing and lid forming.

Related art discloses a method for preventing deterioration of workability that occurs during storage, the method involving specifying monomer components constituting the polyester resin. However, in such a case, the monomers that can be used are limited and thus structural limitations occur when the monomers are polymerized. For example, an invention has been made in which a particular divalent alcohol having a horizontal asymmetry structure is used and a polyester resin having a branched structure is used to prevent crystallization of the polyester resin. However, since a highly branched monomer is added, the molecular weight cannot be increased and the workability is degraded (for example, Patent Literature 1).

An invention has also been made in which a particular amount or more of a particular monomer (1,4-butanediol or 1,4-cyclohexanedimethanol) is added to avoid degradation of the workability during storage, but this invention has been unsatisfactory (for example, Patent Literature 2).

Patent Literature 1: Japanese Unexamined Patent Application Publication No. 2002-201411
Patent Literature 2: Japanese Unexamined Patent Application Publication No. 2004-346131

### Disclosure of Invention

### Technical Problem

An object of the present invention is to provide a coating material composition that has excellent coating workability and is particularly used as an interior coating material for beverage cans, food cans, etc., with which not only crystallization of a coating which causes degradation of workability is suppressed but also internal stress is suppressed and the coating exhibits stretchability. Solution to Problem

The inventors of the present invention have found a coating material composition having high workability without limiting the composition of the main polyester resin, in which the molecular weight of the main polyester resin can be increased by adding a polyester resin having a low glass transition temperature (Tg) and the resulting coating exhibits stretchability due to addition of a low-Tg component. Thus, the present invention has been made.

That is, the present invention provides a coating material composition containing 100 parts by weight of a polyester resin composition and 1 to 100 parts by weight of a resole-type phenolic resin (C), the polyester resin composition containing a polyester resin (A) having a glass transition temperature (hereinafter referred to as Tg) of 0°C or more and a polyester resin (B) having a Tg less than 0°C, wherein a weight ratio [(A)/(B)] is 95/5 to 60/40. A can coating material that contains the coating material composition, and a metal material with a coating for can interior surfaces, the coating being a cured coating formed by curing a coating of the can coating material are also provided.

### Advantageous Effects of Invention

According to the present invention in which a low-Tg polyester resin is used as an essential component, a coating material composition that overcomes degradation of workability with lapse of time, which has been a problem in the related art for a polyester resin/phenolic resin-based coating, can be obtained without impairing the properties of beverage can interior coatings.

### Description of Embodiments

A coating material composition used in the present invention will now be described.

A polyester resin (A) used in a coating material composition of the present invention preferably has a number-average molecular weight of 1,000 or more from the viewpoint of good workability, preferably has a number-average molecular weight of 100,000 since a coating material prepared therefrom does not have excessively high viscosity and is suitable for application processes, and preferably has a number-average molecular weight within the range of 6,000 to 30,000.

The glass transition temperature is preferably 0°C to 100°C, more preferably 10 to 90°C, and most preferably 30 to 90°C. When a polyester resin having a glass transition temperature lower than 0°C is used as a main resin, corrosion resistance and the blocking property of the coating will be deteriorated because such a polyester resin has poor barrier properties against water vapor, oxygen, and the like. When the glass transition temperature is higher than 100°C, the coating becomes hard and the workability is degraded.

The polyester resin (A) may be any resin obtained by esterifying a polybasic acid component and a polyhydric alcohol component. For example, one or more dibasic acids such as phthalic anhydride, isophthalic acid, terephthalic acid, succinic acid, fumaric acid, adipic acid, azelaic acid, sebacic acid, and a dimer acid and lower alkyl esters of these acids are mainly used as the polybasic acid component. If needed, a monobasic acid such as benzoic acid, crotonic acid, or p-t-butylbenzoic acid, or a trivalent or higher polybasic acid, such as trimellitic anhydride, methylcyclohexene tricarboxylic acid, or pyromellitic anhydride is used in combination, for example.

Dihydric alcohols such as ethylene glycol, diethylene glycol, propylene glycol, 1,4-butanediol, neopentyl glycol, 3-methylpentanediol, 1,4-hexanediol, 1,6-hexanediol, and cyclohexane dimethanol are mainly used as the polyhydric alcohol component. If needed, a trihydric or higher alcohol such as glycerin, trimethylolethane, trimethylolpropane, or pentaerythritol can be used in combination. These polyhydric alcohols may be used alone or as a mixture of two or more.

Examples of the commercially available products include VYLON 300, VYLON 500, VYLON 560, VYLON 600, VYLON 630, VYLON 650, VYLON 670, VYLON GK130, VYLON GK140, VYLON GK150, VYLON GK190, VYLON GK330, VYLON GK590, VYLON GK680, VYLON GK780, VYLON GK810, VYLON GK890, VYLON GK200, VYLON GK226, VYLON GK240, VYLON GK245, VYLON GK270, VYLON GK280, VYLON GK290, VYLON GK296, VYLON GK660, VYLON GK885, VYLON GK250, VYLON GK360, VYLON GK640, and VYLON GK880 produced by Toyobo Co., Ltd., elitel UE-3220, elitel UE-3500, elitel UE-3210, elitel UE-3215, elitel UE-3216, elitel UE-3620, elitel UE-3240, elitel UE-3250, elitel UE-3300, elitel UE-3200, elitel UE-9200, elitel UE-3201, elitel UE-3203, elitel UE-3350, elitel UE-3370, elitel UE-3380, elitel UE-3600, elitel UE-3980, elitel UE-3660, elitel UE-3690, elitel UE-9600, and elitel UE-9800 produced by Unitika Ltd., and ARON MELT PES-310, ARON MELT PES-318, ARON MELT PES-334, ARON MELT PES-316, and ARON MELT PES-360 produced by TOAGOSEI Co., Ltd.

The content of a polyester resin (B) having Tg less than 0°C used in the coating material composition of the present invention is 5 to 40 parts by weight and preferably in the range of 10 to 30 parts by weight. The glass transition temperature is preferably -5 to -40°C and more preferably -10 to -30°C. The closer the glass transition temperature is to 0°C, the smaller the invention effect tends to be. When the glass transition temperature is lower than -30°C, the handling property is degraded and the blocking property is adversely affected.

Examples commercially available products of the polyester resin (B) having a Tg of 0°C or less used in the coating material composition of the present invention include VYLON 516, VYLON 550, BX-1001, VYLON GM900, VYLON GM920, VYLON GM913, VYLON GM420, VYLON GA1300, VYLON GA3200, VYLON GA5300, VYLON GA5410, VYLON GA6300, and VYLON GA6400 produced by Toyobo Co., Ltd., and ARON MELT PES-110H, ARON MELT PES-120H, ARON MELT PES-140F, and ARON MELT PES-340 produced by TOAGOSEI Co., Ltd.

The content of a resole-type phenolic resin crosslinking agent (C) is 1 to 100% by weight and preferably in the range of 20 to 80 parts by weight.

An example of the resole-type phenolic resin crosslinking agent (C) used in the coating material composition of the present invention is one synthesized from a formaldehyde and a trifunctional phenolic compound or difunctional phenol in the presence of an alkali catalyst. Examples of the trifunctional phenol compound include carbolic acid, m-cresol, m-ethylphenol, 3,5-xylenol, or m-methoxyphenol. Examples of the difunctional phenol include p-cresol, o-cresol, p-tert-butylphenol, p-ethylphenol, 2,3-xylenol, 2,5-xylenol, and m-methoxy phenol. These phenolic compounds can be used alone or in combination as a mixture. A phenolic resin in which all or some of the methylol groups contained in the phenolic resin are etherified with an alcohol having 1 to 12 carbon atoms can also be used.

The coating material composition of the present invention may further contain an acid catalyst (D) that further accelerates the curing reaction. Examples of the acid catalyst (D) that can be used include inorganic acids such as phosphoric acid, organic acids such as dodecylbenzenesulfonic acid and toluene sulfonic acid, and these acids blocked by amine or the like. The content of the acid catalyst (D) is 0.1 to 5 parts by weight and preferably in the range of 0.2 to 3.0 parts by weight.

The coating material composition of the present invention is particularly preferable as a can coating material. The coating material composition may also be used to form coatings on various metal materials such as aluminum, tin-plated steel sheets, pretreated metals, and steel, or as a coating agent for other materials such as wood and films and processed products thereof. In the description below, the use as a can coating material is specifically described.

Examples of various types of organic solvents that can be used as a solvent in the coating material that contains the coating material composition of the present invention include, but are not limited to, aromatic hydrocarbons such as toluene, xylene, Solvesso #100, and Solvesso #150, fatty hydrocarbons such as hexane, heptane, octane, and decane, and esters such as methyl acetate, ethyl acetate, isopropyl acetate, butyl acetate, amyl acetate, ethyl formate, and butyl propionate. Examples of the water-miscible organic solvents include alcohols such as methanol, ethanol, propanol, and butanol, ketones such as acetone, methyl ethyl ketone, and cyclohexanone, and glycol ethers such as ethylene glycol (mono or di)methyl ether, ethylene glycol (mono or di)ethyl ether, ethylene glycol monopropyl ether, ethylene glycol monoisopropyl ether, monobutyl ether, diethylene glycol (mono or di)methyl ether, diethylene glycol (mono or di)ethyl ether, diethylene glycol monoisopropyl ether, diethylene glycol monobutyl ether, triethylene glycol (mono or di)methyl ether, propylene glycol (mono or di)methyl ether, propylene glycol monopropyl ether, propylene glycol monobutyl ether, and dipropylene glycol (mono or di)methyl ether.

A can coating material that uses the coating material composition of the present invention can further contain various lubricants, defoamers, leveling agents, lubricants, pigments, and the like. Other curing agents such as a melamine resin, a benzoguanamine resin, and an isocyanate resin can also be used as a curing aid. An appropriate combination of these materials can be used depending on the drying conditions, baking conditions, and curing conditions of the coating material.

The can coating material that uses the coating material composition of the present invention can be applied to a metal substrate, such as a steel sheet or a can aluminum sheet, or a PET film by a known technique such as spray coating, e.g., air spraying, air-less spraying, or electrostatic spraying, dip coating, roll coater coating, gravure coating, or electrodeposition coating. The amount of coating on a dry coating thickness basis is preferably about 0.1 to 20 µm.

When the resin composition of the present invention is used as a can coating material, it is preferable to perform baking at 100°C to 280°C for 1 second to 30 minutes. When these ranges are satisfied, a cured coating having good performance is formed and thus a metal material with a coating for can interior surfaces can be obtained.

### EXAMPLES

The present invention will now be described in more specific detail by using Examples which do not limit the scope of the invention. In the description below, "parts" and "%" mean "parts by weight" and "% by weight", respectively, unless otherwise noted.

### [Synthetic Example 1]

Into a flask, 106 parts of terephthalic acid, 225 parts of isophthalic acid, and 4 parts of trimellitic anhydride were charged as the acid component and 143 parts of 2-methyl-1,3-butanediol, 86 parts of 1,4-butanediol, 92 parts of 1,4-cycloehxanedimethanol, and 0.13 part of titanium tetrabutoxide were charged as the polyhydric alcohol component. The resulting mixture was slowly heated to 220°C over 4 hours to distill water and conduct esterification. After a particular amount of water had been distilled, polymerization was conducted by reducing the pressure to 10 mmHg over 30 minutes while increasing the temperature to 250°C, and under this condition, post polymerization was conducted for 50 minutes at 1 mmHg or less. After the polymerization at reduced pressure had been terminated, the resin was recovered. A polyester resin (A1) having a number-average molecular weight of 20,000, an acid value of 19 (mgKOH/g), and a glass transition temperature of 30°C was obtained as a result. The resin was then cooled to a temperature not higher than 100°C and diluted with a cyclohexanone/Solvesso 150 50/50 mixed solution. As a result, a polyester resin solution (resin solution A1) having a nonvolatile content of 40% was obtained.

### [Preparation of polyester solution]

Into a four-necked flask, 200 parts of a polyester resin GK-880 (A2, Tg: 84°C, Mn: 18000) produced by Toyobo Co., Ltd., 150 parts of Solvesso 150, and 150 parts of cyclohexanone were placed. The mixture was heated to 80°C, retained thereat for 2 hours, and, after complete dissolution of the resin was confirmed, cooled to room temperature. As a result, a GK-880 solution having a solid content of 40% was obtained (resin solution A2). A solution of GK-360 (A3, Tg: 56°C, Mn: 16000) produced by Toyobo Co., Ltd., having a solid content of 40% was prepared in the similar manner (resin solution A3).

### [Preparation of low-Tg polyester solution]

Into a four-necked flask, 200 parts of a polyester resin, GA6400 (B1, Tg: -20°C) produced by Toyobo Co., Ltd., 150 parts of Solvesso 150, and 150 parts of cyclohexanone were placed. The mixture was heated to 80°C, retained thereat for 2 hours, and, after complete dissolution of the resin was confirmed, cooled to room temperature. As a result, a solution of GA6400 having a solid content of 40% was obtained (resin solution B1).

A solution of GA5410 (B2, Tg: -3°C) having a solid content of 40% (resin solution B2) and a solution of BX-1001 (B3, Tg: -18°C) having a solid content of 40% (resin solution B3) were obtained in the similar manner.

### [Preparation of coating material]

Resin solution A1 (solid content: 40%): 55.0 parts
Resin solution B1 (solid content: 40%): 6.0 parts
Phenolic resin (C), TD-2495 (solid content: 50%) produced by
DIC Corporation: 9.6 parts
Cyclohexanone: 15.0 parts
Methyl isobutyl ketone (MIBK): 14.3 parts
Acid catalyst (D), dodecylbenzenesulfonic acid: 0.1 part
Total: 100.0 parts

The resin solutions, solvents, and acid catalyst were mixed at ratios described above to obtain an Example 1 solution.

### [Preparation of test coated sheet]

Each of the coating materials obtained in the respective examples was applied to a 5182 aluminum alloy sheet having a thickness of 0.26 mm by using a bar coater so that the weight of the dry coating film was 70 mg/dm², baked under oven conditions under which PMT was 250°C at an oven pass time of 23 seconds, and cooled to room temperature. As a result, a test coated sheet was obtained.

### [Initial workability]

The test coated sheet was cut into 40 mm x 50 mm and bent at the middle in the letter V shape by using a bending tester so that the coated surface faced outward. Two aluminum sheets each having a thickness of 0.26 mm were inserted into in the bent test coated sheet and the bent test coated sheet and the two aluminum sheets were loaded onto a tester. A weight of 3 kg was dropped from a height of 50 cm so as to obtain a test piece.

The outer side of the bent portion of this test piece was pressed against a sponge impregnated with 1% saline and electricity was passed through the test piece at 6 V for 3 seconds. The current value at that time was measured with an enamel rater (current tester) produced by SENCON. The results were evaluated according to the following four-grade scale.
AA: The current value was less than 1 mA.
A: The current value was 1 mA or more but less than 5 mA.
B: The current value was 5 mA or more but less than 10 mA.
C: The current value was 10 mA or more.

### [Workability after time lapse]

Immediately after the test coated sheet was prepared, the test coated sheet was placed in a 40°C thermostatic oven and stored for 15 days and 30 days. Then the evaluation was conducted through the same test method as the initial workability.

### [Adhesion]

The coating of the test coated sheet was incised to form a grid consisting of 100 squares each 1 x 1 mm in size and the resulting test piece was treated with hot water at 125°C for 30 minutes. Then an adhesive tape was attached to the squares of the grid and then rapidly peeled. The state of separation of the coating was observed and evaluated in accordance with the following four-grade scale.
AA: No separation occurred.
A: Separation occurred in about 1 to 2% of the entirety.
B: Separation occurred in about 3 to 10% of the entirety.
C: Separation occurred in about 11 to 100% of the entirety.

### [KMnO4 consumption]

The test coated sheet having an area or 160 cm² was immersed in 100 mL of purified water and a hot water treatment was conducted at 125°C for 0.5 hour. Then the potassium permanganate consumption was measured and evaluated in accordance with the following four-grade scale:
AA: The consumption was less than 3 ppm.
A: The consumption was 3 ppm or more but less than 5 ppm.
B: The consumption was 5 ppm or more but less than 10 ppm.
C: The consumption was 10 ppm or more.

### [Openability]

A lid subjected to a lid-forming process was treated with 100°C hot water for 10 minutes. The tab of the lid was lifted and the lid was opened. The width of the coating remains of the interior coating film at the opening portion was evaluated in accordance with the following four-grade scale:
AA: The width of the film remains was less than 0.2 mm.
A: The width of the film remains was 0.2 mm or more but less than 0.4 mm.
B: The width of the film remains was 0.4 mm or more but less than 0.6 mm.
C: The width of the film remains was 0.6 mm or more.

### [Retort resistance]

The test coated sheet was placed upright in a beaker and ion exchange water was poured into the beaker up to a half the height of the test piece. The beaker was then placed in a pressure vessel and subjected to a retort treatment at 125°C for 30 minutes. Evaluation was based on visual observation.
AA: Excellent
A: Little whitening but no blisters were observed
B: Moderate whitening and some blisters were observed
C: Whitening and blistered were observed

### [Secondary working corrosion resistance]

A test solution was charged into a 350 mL can at low temperature and the lid subjected to the lid-forming process described above was seamed onto the can. The resulting can was heated to 60°C and then stored at 37°C for 1 month. Twenty cans were then opened to observe the lid interior to find if there were any corrosion. The evaluation was conducted in accordance with the following four-grade scale. The test solution used was a 0.5% citric acid/0.5% saline solution.
AA: No corrosion was observed in any of the lids.
A: Slight corrosion was observed in some of the lids.
B: Slight corrosion was observed in all of the lids.
C: Extensive corrosion was observed in all of the lids.

### [Flavor test]

Both the interior and exterior surfaces of the aluminum sheet described above were coated with a coating material by using a bar coater so that the weight of the dry coating was 70 mg/dm². Baking was conducted under the same conditions so as to form a test coated sheet. The test coated sheet having a surface area of 500 cm² and a sports supplement drink were placed in a 500 mL glass jar at low temperature. The glass jar was heated to 75°C and then stored at 37°C for 1 month while blocking out light. A blank not containing a coated sheet was also prepared as a control. The flavor retention property of the sport supplement drink was evaluated in accordance with the following four-grade scale:
AA: Not different from the control.
A: Slight deterioration of flavor was detected compared to the control.
B: Deterioration of flavor was detected compared to the control.
C: Extensive deterioration of flavor was detected compared to the control.

### [DSC measurement]

The DSC of the coating was measured with a DSC meter (differential scanning calorimetry) produced by MAC Science. The dry coating was stored at 40°C for 30 days and then measurement was conducted twice in a row to evaluate whether the charts obtained by the measurement were the same. This is because if crystallization occurs extensively in the coating, the crystal structure collapses as a result of heating and thus the peak emerged in the first measurement is no longer observed in the second measurement.
A: The same peak was observed in both the first and second measurements.
F: Different peaks were observed in the first and second measurements.

### [Measurement of internal stress]

The internal stress was measured by a FSB method (reference literature: Journal of the Japan Society of Colour Material, 70 [10], 650-655 (1997)). This is because internal stress occurs as crystallization proceeds in the coating. For this test, the weight of the coating after drying was 200 mg/dm².
A: No internal stress occurred after storing the dry coating for 30 days.
F: Internal stress occurred after storing the dry coating for 30 days.

The compositions of the coating materials and evaluation results of Examples 1 to 8 are shown in Tables 1-1 and 1-2.

[Table 1]

**Table 1-1**

| Polyester resin solution composition (parts by weight) | | Examples | | | | |
|---|---|---|---|---|---|---|
| | | 1 | 2 | 3 | 4 | 5 |
| Polyester resin A | A1 | 90 | | | 95 | 70 |
| | A2 | | 90 | | | |
| | A3 | | | 90 | | |
| Polyester resin B | B1 | 10 | 10 | 10 | 5 | 30 |
| | B2 | | | | | |
| | B3 | | | | | |
| Phenolic resin | C | 20 | 20 | 20 | 20 | 20 |
| Acid catalyst | D | 0.4 | 0.4 | 0.4 | 0.4 | 0.4 |
| Evaluation items | Initial workability | AA | AA | AA | AA | AA |
| | Workability after 15 days | AA | AA | AA | AA | AA |
| | Workability after 30 days | AA | AA | AA | A | AA |
| | Adhesion | AA | AA | AA | AA | AA |
| | KMnO₄ consumption | AA | AA | AA | AA | AA |
| | Openability | AA | AA | AA | AA | A |
| | Retort resistance | AA | A | AA | AA | AA |
| | Corrosion resistance | A | A | A | A | A |
| | Flavor | AA | AA | AA | AA | A |
| | DSC | A | A | A | A | A |
| | Internal stress | A | A | A | A | A |

[Table 2]

**Table 1-2**

| Polyester resin solution composition (parts by weight) | | Examples | | | |
|---|---|---|---|---|---|
| | | 6 | 7 | 8 | 9 |
| Polyester resin A | A1 | 90 | 90 | 90 | 90 |
| | A2 | | | | |
| | A3 | | | | |
| Polyester resin B | B1 | | | 10 | 10 |
| | B2 | 10 | | | |
| | B3 | | 10 | | |
| Phenolic resin | C | 20 | 20 | 15 | 30 |
| Acid catalyst | D | 0.4 | 0.4 | 0.4 | 0.4 |
| Evaluation items | Initial workability | AA | AA | AA | AA |
| | Workability after 15 days | AA | AA | AA | AA |
| | Workability after 30 days | A | AA | AA | A |
| | Adhesion | AA | AA | AA | AA |
| | KMnO₄ consumption | AA | AA | AA | A |
| | Openability | AA | AA | A | AA |
| | Retort resistance | AA | AA | A | AA |
| | Corrosion resistance | A | A | A | AA |
| | Flavor | AA | AA | AA | A |
| | DSC | A | A | A | A |
| | Internal stress | A | A | A | A |

The compositions of the coating materials and evaluation results of Comparative Examples 1 to 4 are shown in Table 2.

[Table 3]

**Table 2**

| Polyester resin solution composition (parts by weight) | | Comparative Examples | | | |
|---|---|---|---|---|---|
| | | 1 | 2 | 3 | 4 |
| Polyester resin A | A1 | 100 | 100 | | |
| | A2 | | | 100 | |
| | A3 | | | | 100 |
| Polyester resin B | B1 | | | | |
| | B2 | | | | |
| | B3 | | | | |
| Phenolic resin | C | 45 | 20 | 20 | 20 |
| Acid catalyst | D | 0.4 | 0.4 | 0.4 | 0.4 |
| Evaluation items | Initial workability | AA | AA | AA | AA |
| | Workability after 15 days | B | B | B | B |
| | Workability after 30 days | C | C | C | C |
| | Adhesion | AA | AA | AA | AA |
| | KMnO₄ consumption | AA | AA | AA | AA |
| | Openability | A | AA | AA | AA |
| | Retort resistance | A | AA | A | AA |
| | Corrosion resistance | A | A | A | A |
| | Flavor | AA | AA | AA | AA |
| | DSC | F | F | F | F |
| | Internal stress | F | F | F | F |

The results of Examples confirmed that, in Examples 1 to 9, performance was satisfactory for all of the evaluation items including the initial workability, the workability after 15 days of storage, and the workability after 30 days of storage.

It was confirmed that, in Comparative Examples 1 to 4, the ERV decreased to the level B in the evaluation test for the workability after 15 days and the workability degraded to the level C in the evaluation test for the workability after 30 days.

### Industrial Applicability

The resin composition of the present invention does not contain bisphenol A that can adversely affect human body due to its estrogen action and yet can be widely used in coating materials for various cans having excellent resort resistance, corrosion resistance, and content retaining property because the coating formed therefrom exhibits good workability, coating hardness, and curability.

## Claims

1. A coating material composition comprising 100 parts by weight of a polyester resin composition and 1 to 100 parts by weight of a resole-type phenolic resin (C), the polyester resin composition containing a polyester resin (A) having a glass transition temperature (hereinafter referred to as Tg) of 0°C or more and a polyester resin (B) having a Tg less than 0°C, wherein a weight ratio [(A)/(B)] is 95/5 to 60/40.

2. The coating material composition further comprising 0.1 to 5.0 parts by weight of an acidic curing catalyst relative to the resin composition of Claim 1.

3. The coating material composition according to Claim 1 or 2, wherein an endothermic peak due to crystallization that occurs in a coating with lapse of time does not emerge in the range of 20°C to 80°C in differential scanning calorimetry (DSC) measurement.

4. A can coating material comprising the coating material composition according to any one of Claims 1 to 3.

5. A metal material with a coating for can interior surfaces, comprising a cured coating formed by curing a coating of the can coating material according to Claim 4 on a surface of a metal material.
